(19) Europäisches Patentamt
European Patent Office
Office européen des brevets

(11) **EP 4 660 814 A1**

(12) **EUROPEAN PATENT APPLICATION**
published in accordance with Art. 153(4) EPC

(43) Date of publication:
**10.12.2025 Bulletin 2025/50**

(21) Application number: **23924941.0**

(22) Date of filing: **13.10.2023**

(51) International Patent Classification (IPC):
*G06F 11/36* (2025.01)

(52) Cooperative Patent Classification (CPC):
**G06F 11/36**

(86) International application number:
**PCT/CN2023/124446**

(87) International publication number:
**WO 2024/178987 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2023 CN 202310179118**

(71) Applicant: **Huawei Cloud Computing
Technologies Co., Ltd.
Guiyang, Guizhou 550025 (CN)**

(72) Inventors:
- **ZHANG, Lin**
  **Guiyang, Guizhou 550025 (CN)**
- **HUANG, Wang**
  **Guiyang, Guizhou 550025 (CN)**
- **JIN, Zhe**
  **Guiyang, Guizhou 550025 (CN)**
- **WANG, Tuo**
  **Guiyang, Guizhou 550025 (CN)**

(74) Representative: **Goddar, Heinz J.
Boehmert & Boehmert
Anwaltspartnerschaft mbB
Pettenkoferstrasse 22
80336 München (DE)**

(54) **SOFTWARE TESTING METHOD AND DEVICE**

(57) Embodiments of this application disclose a software test method, to improve test efficiency of scenario-based testing. The method in embodiments of this application includes the following: A computing device obtains an application programming interface API calling sequence on a cloud platform, where the API calling sequence includes API calling records sorted by time on the cloud platform, and the API calling records include names of APIs called by the computing device at different times; generates a spatial-temporal graph based on the API calling sequence, where the spatial-temporal graph includes a calling relationship between a plurality of APIs and calling times; identifies, based on the spatial-temporal graph, at least one user scenario corresponding to the API calling sequence, and generates a test case corresponding to the at least one user scenario; and performs software testing based on the test case.

201: Obtain an application programming interface API calling sequence on a cloud platform, where the API calling sequence includes API calling records sorted by time on the cloud platform

202: Generate a spatial-temporal graph based on the API calling sequence, where the spatial-temporal graph includes a calling relationship between a plurality of APIs and calling times

203: Identify, based on the spatial-temporal graph, at least one user scenario corresponding to the API calling sequence, and generate a test case corresponding to the at least one user scenario

204: Perform software testing based on the test case

FIG. 2

## Description

This application claims priority to Chinese Patent Application No. 202310179118.4, filed with the China National Intellectual Property Administration on February 28, 2023, and entitled "SOFTWARE TEST METHOD AND APPARATUS", which is incorporated herein by reference in its entirety.

## TECHNICAL FIELD

Embodiments of this application relate to the computer field, and in particular, to a software test method and apparatus.

## BACKGROUND

As cloud service technologies become increasingly popular, cloud platforms based on the cloud service technologies are increasingly widely applied. The cloud platform involves a large quantity of component services and carries users and service applications in different industries. As a result, user application scenarios on the cloud platform become increasingly complex and change continuously. Therefore, the cloud platform needs to perform scenario-based testing based on user scenarios.

Currently, when scenario-based testing is performed on a cloud platform, test personnel need to sort out user scenarios based on all use processes of users and compile test cases in different scenario definitions and frameworks, and scenario-based testing is performed on the cloud platform based on the test cases. The test cases are compiled mainly depending on experience of the test personnel, which is subjective. As a result, scenario test results cannot be quickly and comprehensively obtained. In addition, test results vary greatly due to different test cases compiled by different personnel. As a result, test efficiency is low and test precision is poor.

In addition, the user application scenarios in a cloud scenario keep changing. Once a new user application scenario emerges or a user application scenario changes, manual re-analysis and sorting are required. As a result, a test period is long, and overall applicability is poor.

## SUMMARY

Embodiments of this application provide a software test method and apparatus, to improve test efficiency of scenario-based software testing.

According to a first aspect, embodiments of this application provide a software test method. The method may be performed by a computing device, or may be performed by a component of the computing device, for example, a processor, a chip, or a chip system of the computing device, or may be implemented by a logic module or software that can implement all or a part of functions of the computing device. For example, the method provided in the first aspect is performed by the computing device. The method includes the following steps: The computing device obtains an application programming interface API calling sequence on a cloud platform, where the API calling sequence includes API calling records sorted by time on the cloud platform, and the API calling records include names of APIs called by the computing device at different times. The computing device generates a spatial-temporal graph based on the API calling sequence, where the spatial-temporal graph includes a calling relationship between a plurality of APIs and calling times. The computing device identifies a user scenario based on the spatial-temporal graph, and generates test cases corresponding to different user scenarios. The different user scenarios are different user scenarios obtained after a redundant user scenario is eliminated. The computing device performs software testing based on the test case.

In embodiments of this application, the computing device can obtain the user scenario through analysis based on the application programming interface API calling sequence, and generate the test case corresponding to the user scenario, so that the computing device can automatically perform user scenario-based testing based on the test case. This avoids a manual portable test case, improves test accuracy of scenario-based testing on the cloud platform, and accurately improves test efficiency of scenario-based testing on the cloud platform.

In a possible implementation, the computing device sets a shadow client on a gateway corresponding to an application programming interface, and monitors application programming interface calling information of a user on the cloud platform through the shadow client, to obtain the application programming interface calling sequence. The computing device may further configure a monitored API range, a monitoring period, and monitoring duration of the shadow client.

In embodiments of this application, the computing device can copy and record the API calling information of the user through the shadow client, without affecting normal application programming interface calling by the user, so that API sequence obtaining by the computing device does not interrupt application programming interface calling by the user, improving efficiency of API sequence obtaining.

In a possible implementation, in a process in which the computing device identifies, based on the spatial-temporal graph, at least one user scenario corresponding to the API calling sequence, the computing device obtains a target API calling link through extraction based on the spatial-temporal graph, where the target API calling link includes a duplicate API calling link and an independent API calling link, the duplicate API calling link is a link whose link similarity is greater than or equal to a threshold in API calling links in the spatial-temporal graph, and the independent API calling link is a link whose link similarity is less than the threshold in the API calling links in the spatial-temporal graph; and the computing device determines a target user scenario based on the target API calling link, where the target user scenario is a user scenario obtained after a redundant user scenario is eliminated, and there is a correspondence between the target user scenario and a partial sequence in the API calling sequence.

In embodiments of this application, the computing device can extract the duplicate API calling link and the independent API calling link based on the spatial-temporal graph, to identify a duplicate user scenario and an independent user scenario, so that the computing device can eliminate the duplicate user scenario. This avoids redundant user scenario testing, and further improves the test efficiency of scenario-based testing.

In a possible implementation, in a process in which the computing device generates a test case corresponding to the at least one user scenario, the computing device converts the target API calling link based on a cloud platform test framework, to generate test scripts corresponding to different user scenarios. The computing device calls the test scripts to implement testing in different user scenarios. Specifically, the computing device adapts to a common library in the cloud platform test framework based on an interface description, an interface parameter, and an interface time sequence of the target API calling link, and generates, based on a function of the common library, the test scripts corresponding to different user scenarios.

In embodiments of this application, the computing device can convert, based on the cloud platform test framework, the API calling link into the test scripts corresponding to different user scenarios, and call the test script to automatically perform scenario-based testing. This improves the test efficiency of scenario-based testing.

In a possible implementation, in a process in which the computing device generates a test case corresponding to the at least one user scenario, the computing device parses the target API calling link based on an artificial intelligence model, to generate a test case text, where the test case text is used to describe test requirements in different user scenarios. The artificial intelligence model is, for example, a long short-term memory LSTM model and a recurrent neural network RNN model.

In embodiments of this application, the computing device can parse the API calling link based on the artificial intelligence model to obtain the test case text, so that the user can perform scenario-based testing based on the test case text. This improves the test accuracy of performing scenario-based testing by the computing device.

In a possible implementation, in a process in which the computing device performs software testing based on the test script, the computing device calls the test scripts in different user scenarios to perform software testing, and generates test information, where the test information includes a test execution result and representation information, the test execution result includes success, failure, exception, and blocking, and the representation information is used to describe a user scenario feature corresponding to the test execution result.

In embodiments of this application, the computing device can call the test script to perform software testing and generate the test information. Because the test information can reflect the user scenario feature corresponding to the test execution result, the computing device can further analyze a deep association between user scenarios based on the user scenario feature, to reduce redundant test scenarios.

In a possible implementation, in a process in which the computing device calls the test scripts in different user scenarios on the cloud platform to perform software testing, the computing device sets an execution sequence, a quantity of execution times, and an execution parameter for the test scripts in different user scenarios based on the spatial-temporal graph. The execution sequence is, for example, serial or parallel.

In embodiments of this application, the computing device can restore the API calling link in the spatial-temporal graph by calling the test script, to test a real user scenario, thereby improving the test accuracy of scenario-based testing.

In a possible implementation, the computing device performs analysis based on the test information, to obtain an association relationship between different user scenarios; and the computing device aggregates different user scenarios based on the association relationship, to generate a scenario aggregation result, where the scenario aggregation result is used to reduce redundant user scenario testing.

In embodiments of this application, the computing device can analyze the association relationship between the user scenarios based on the test information, and aggregate the user scenarios based on the association relationship. This further reduces the redundant test scenarios, and improves test efficiency of performing scenario-based testing by user equipment.

According to a second aspect, embodiments of this application provide a test apparatus. The apparatus includes a transceiver unit and a processing unit. The transceiver unit is configured to obtain an application programming interface API calling sequence on a cloud platform, where the API calling sequence includes API calling records sorted by time on the cloud platform, and the API calling records include names of APIs called by a computing device at different times. The processing unit is configured to generate a spatial-temporal graph based on the API calling sequence, where the spatial-temporal graph includes a calling relationship between a plurality of APIs and calling times. The processing unit is further configured to: identify, based on the spatial-temporal graph, at least one user scenario corresponding to the API calling sequence, and generate a test case corresponding to the at least one user scenario, where different user scenarios are different user scenarios obtained after a redundant user scenario is eliminated. The processing unit is further configured to perform software testing based on the test case.

In a possible implementation, the processing unit is specifically configured to obtain a target API calling link through extraction based on the spatial-temporal graph, where the target API calling link includes a duplicate API calling link and an independent API calling link, the duplicate API calling link is a link whose link similarity is greater than or equal to a threshold in API calling links in the spatial-temporal graph, and the independent API calling link is a link whose link similarity is less than the threshold in the API calling links in the spatial-temporal graph. The processing unit is specifically configured to determine a target user scenario based on the target API calling link, where the target user scenario is a user scenario obtained after a redundant user scenario is eliminated.

In a possible implementation, the processing unit is specifically configured to convert the target API calling link based on a cloud platform test framework, to generate test scripts corresponding to different user scenarios.

In a possible implementation, the processing unit is specifically configured to parse the target API calling link based on an artificial intelligence model, to generate a test case text, where the test case text is used to describe test requirements in different user scenarios.

In a possible implementation, the processing unit is specifically configured to: call the test scripts in different user scenarios to perform software testing, and generate test information, where the test information includes a test execution result and representation information, and the representation information is used to describe a user scenario feature corresponding to the test execution result.

In a possible implementation, the processing unit is further configured to perform analysis based on the test information, to obtain an association relationship between different user scenarios. The processing unit is further configured to aggregate different user scenarios based on the association relationship, to generate a scenario aggregation result, where the scenario aggregation result is used to reduce redundant user scenario testing.

According to a third aspect, embodiments of this application provide a computing device cluster. The computing device cluster includes one or more computing devices, the computing device includes a processor, the processor is coupled to a memory, the memory is configured to store instructions, and when the instructions are executed by the processor, a cloud server is enabled to perform the method according to any one of the first aspect or the possible implementations of the first aspect.

According to a fourth aspect, embodiments of this application provide a computer-readable storage medium. The computer-readable storage medium stores instructions. When the instructions are executed, a computer is enabled to perform the method according to any one of the first aspect or the possible implementations of the first aspect.

According to a fifth aspect, embodiments of this application provide a computer program product. The computer program product includes instructions, and when the instructions are executed, a computer is enabled to implement the method according to any one of the first aspect or the possible implementations of the first aspect.

It may be understood that, for beneficial effects that can be achieved by any computing device cluster, any computer-readable medium, any computer program product, or the like provided above, refer to beneficial effects in the corresponding method. Details are not described herein again.

**BRIEF DESCRIPTION OF DRAWINGS**

FIG. 1 is a diagram of an architecture of a software test system architecture according to an embodiment of this application;
FIG. 2 is a schematic flowchart of a software test method according to an embodiment of this application;
FIG. 3 is a diagram of a software test method according to an embodiment of this application;
FIG. 4 is a diagram of another software test method according to an embodiment of this application;
FIG. 5 is a diagram of another software test method according to an embodiment of this application;
FIG. 6 is a diagram of another software test method according to an embodiment of this application;
FIG. 7 is a diagram of another software test method according to an embodiment of this application;
FIG. 8A and FIG. 8B are a diagram of another software test method according to an embodiment of this application;
FIG. 9 is a diagram of another software test method according to an embodiment of this application;
FIG. 10 is a diagram of another software test method according to an embodiment of this application;
FIG. 11 is a diagram of a test apparatus according to an embodiment of this application;
FIG. 12 is a diagram of a structure of a computing device according to an embodiment of this application;
FIG. 13 is a diagram of a computing device cluster according to an embodiment of this application; and
FIG. 14 is a diagram of another computing device cluster according to an embodiment of this application.

**DESCRIPTION OF EMBODIMENTS**

Embodiments of this application provide a software test method and apparatus, to improve test efficiency of scenario-based testing.

In the specification, claims, and accompanying drawings of this application, the terms "first", "second", "third", "fourth", and the like (if existent) are intended to distinguish between similar objects but do not necessarily indicate a specific order or sequence. It should be understood that data termed in such a way are interchangeable in proper circumstances, so that embodiments described herein can be implemented in other orders than the order illustrated or described herein. In addition, terms "include", "have", and any other variants thereof are intended to cover the nonexclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. To be precise, use of the word like "example" or "for example" is intended to present a relative concept in a specific manner.

With reference to the accompanying drawings, the following describes a software test method and apparatus provided in embodiments of this application.

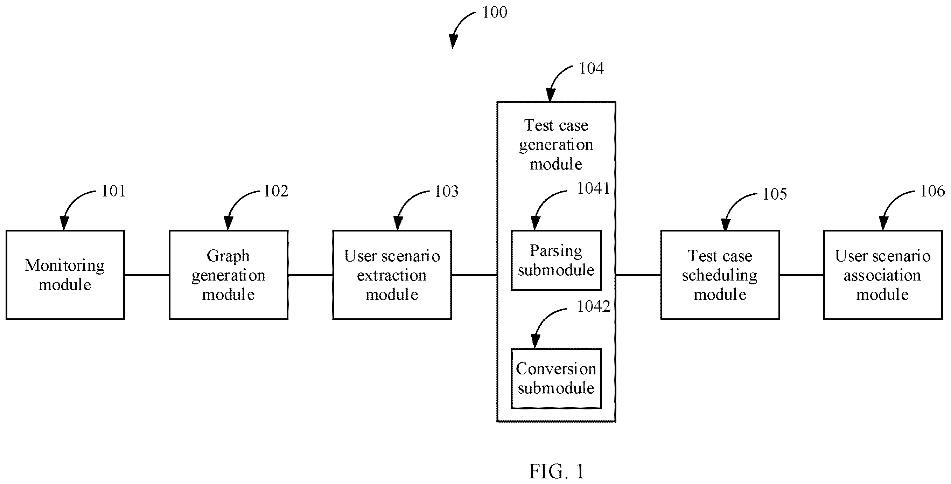

FIG. 1 is a diagram of a system architecture to which a software test method is applied according to an embodiment of this application. In the example shown in FIG. 1, a software test system 100 includes a monitoring module 101, a graph generation module 102, a user scenario extraction module 103, a test case generation module 104, a test case scheduling module 105, and a user scenario association module 106. The test case generation module 104 includes a parsing submodule 1041 and a conversion submodule 1042. The following describes specific functions of the modules in the software test system 100.

The monitoring module 101 is configured to obtain calling information of an application programming interface API of a user, to obtain an application programming interface API calling sequence, where the API calling sequence includes a calling time and called interface information. The monitoring module 101 specifically installs a shadow client on a gateway on a cloud platform, and monitors application programming interface calling information of all users on the cloud platform through the shadow client. The monitoring module 101 may set a monitoring range and monitoring duration through the shadow client.

The graph generation module 102 is configured to generate a spatial-temporal graph based on the application programming interface API calling sequence. The spatial-temporal graph is a two-dimensional coordinate graph, a horizontal coordinate of the spatial-temporal graph is the calling time, and a vertical coordinate is a name of a called application programming interface. The spatial-temporal graph can completely record a calling panorama of the application programming interface of the user.

The user scenario extraction module 103 is configured to extract a user scenario based on the spatial-temporal graph, to obtain one or more user scenarios. Specifically, the user scenario extraction module 103 can analyze an application programming interface calling link in the spatial-temporal graph, extract a target API calling link, where the target API calling link includes a duplicate API calling link and an independent API calling link, and determine a target user scenario based on the target API calling link.

The user scenario extraction module 103 can further perform similarity matching on local links of the API calling link in the spatial-temporal graph, and determine a local link whose link similarity is greater than a threshold as a duplicate API calling link. The user scenario extraction module 103 can further determine a local link that does not have a similar API calling link in the spatial-temporal graph as an independent API calling link, and continuously perform similarity matching in a subsequently collected spatial-temporal graph.

The test case generation module 104 is configured to generate a test case based on an API calling link corresponding to a user scenario, where the test case includes a test case text and a test script. The test case generation module 104 includes the parsing submodule 1041 and the conversion submodule 1042. The parsing submodule 1041 is configured to parse the API calling link corresponding to the user scenario, to generate the test case text. The test case text is used to describe a test requirement corresponding to the test user scenario. The conversion submodule 1042 is configured to convert the API calling link corresponding to the user scenario, to generate the test script. The test script is used by a computing device to perform scenario-based testing.

The test case scheduling module 105 is configured to schedule, on the cloud platform, test scripts corresponding to different user scenarios, to perform scenario-based testing, so that a monitoring apparatus can monitor scenario-based testing, to obtain test information. The test information includes a test execution result and representation information.

The user scenario association module 106 is configured to: analyze the test information corresponding to different user scenarios, and perform user scenario association based on an analysis result, to determine user scenarios that have an association relationship. The user scenario association module 106 is further configured to aggregate the user scenarios that have the association relationship, so as to reduce a quantity of user scenarios that need to be tested.

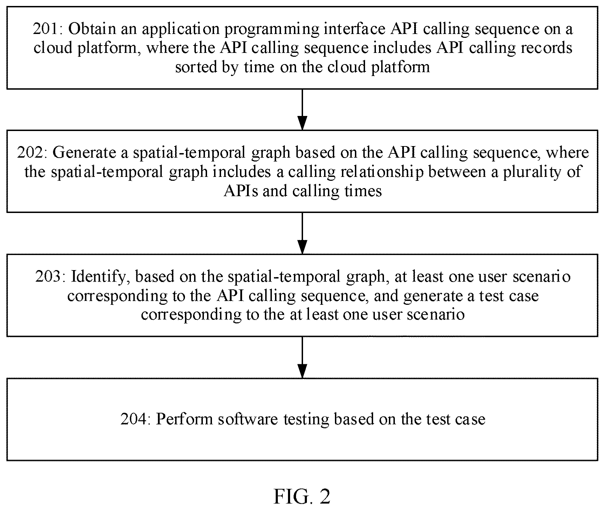

The following describes in detail a software test method provided in embodiments of this application with reference to FIG. 2.

FIG. 2 is a schematic flowchart of a software test method according to an embodiment of this application. In the example shown in FIG. 2, the software test method provided in embodiments of this application includes the following steps.

201: Obtain an application programming interface API calling sequence on a cloud platform, where the API calling sequence includes application programming interface calling records sorted by time on the cloud platform.

A computing device obtains the application programming interface API calling sequence on the cloud platform, where the API calling sequence includes the application programming interface calling records sorted by time on the cloud platform, and the application programming interface calling records include names of APIs called by the computing device at different times. Specifically, the computing device installs a shadow client on a gateway on the cloud platform, and obtains calling times of API calling and API calling information of all users on the cloud platform through the shadow client.

It should be noted that the shadow client on the cloud platform can copy and record the application programming interface calling information of the user, without affecting normal application programming interface calling by the user. The user may configure the shadow client, including configuring a monitored API range, a monitoring period, and monitoring duration.

In embodiments of this application, the computing device can copy and record the API calling information of the user through the shadow client. This avoids impact of obtaining the API sequence by the computing device on application programming interface calling by the user, and improves efficiency of obtaining the API sequence by the computing device.

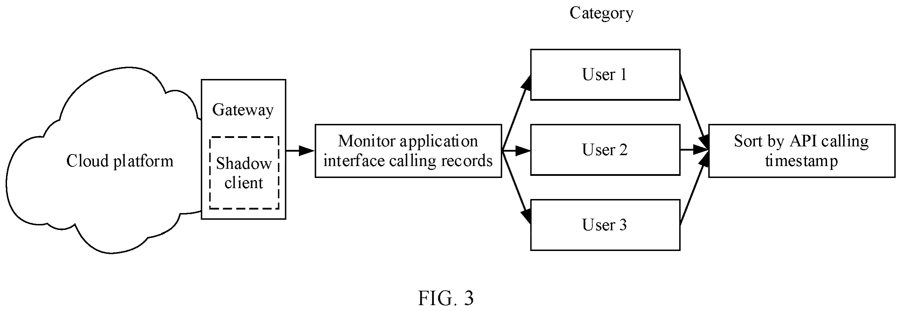

FIG. 3 is a diagram of obtaining an application programming interface calling sequence according to an embodiment of this application. In the embodiment shown in FIG. 3, a computing device installs a shadow client on an API gateway of a cloud platform. The shadow client can monitor and record API calling records of all users on the cloud platform, and classify the API calling records based on different users, to obtain an API calling record of each user, where the API calling record includes a calling time and a name of a called API, for example, the computing device calls API-a at a moment t1.

In the example shown in FIG. 3, after obtaining the API calling record of each user, the computing device sorts the API calling records based on API calling timestamps, to generate an API calling sequence. Different users have respective corresponding API calling sequences. The API calling sequence generated by the computing device may be identified by using a set. For example, an API calling sequence set S of user 1 is as follows:

$$S = \{\{A_{t1}\}, \{A_{t2}\}, \{A_{t3}\}, \dots\}$$

202: Generate a spatial-temporal graph based on the API calling sequence, where the spatial-temporal graph includes a calling relationship between a plurality of APIs and calling times.

The computing device generates the spatial-temporal graph based on the API calling sequence, where the spatial-temporal graph includes the calling relationship between the plurality of APIs and the calling times. A calling relationship between APIs is presented by using an API calling link. Specifically, the computing device generates an API calling link based on a calling relationship between application programming interfaces in the API calling sequence. The API calling link forms an API calling spatial-temporal graph of the user. A horizontal coordinate of the spatial-temporal graph is a calling time, and a vertical coordinate is API calling information. The calling information is, for example, a name of an application programming interface API. The spatial-temporal graph can completely record an application programming interface calling link of the user. The computing device stores API calling spatial-temporal graphs of different users in a database.

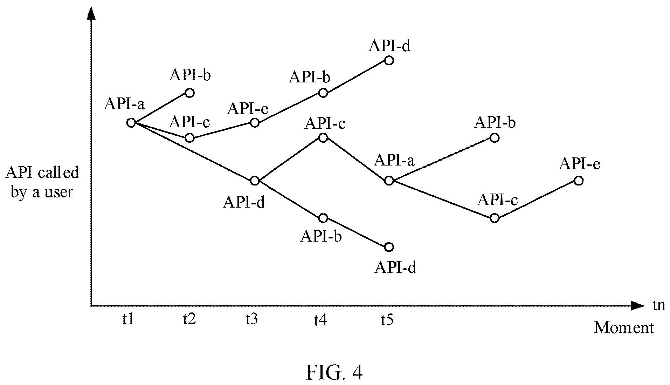

FIG. 4 is a diagram of a spatial-temporal graph according to an embodiment of this application. In the example shown in FIG. 4, a computing device generates a spatial-temporal graph based on an API calling sequence. A horizontal coordinate of the spatial-temporal graph is a calling time, and a vertical coordinate is an interface name of an API. The spatial-temporal graph includes a calling relationship between different APIs.

For example, in the example shown in FIG. 4, user equipment calls an application programming interface API-a at a moment t1, calls application programming interfaces API-b and API-c at a moment t2, and calls an application programming interface API-d at a moment t3. In addition, there is a calling relationship between API-a and each of API-b, API-c, and API-d. Therefore, there is a calling link between API-a and each of API-b, API-c, and API-d.

203: Identify, based on the spatial-temporal graph, at least one user scenario corresponding to the API calling sequence, and generate a test case corresponding to the at least one user scenario.

After generating the spatial-temporal graph, the computing device identifies, based on the spatial-temporal graph, the at least one user scenario corresponding to the API calling sequence, and generates the test case corresponding to the at least one user scenario. The test case includes a test case text and a test script, the test case text is used to describe test requirements in different user scenarios, and the test script is used by the computing device to perform scenario-based testing. The API calling sequence may correspond to one or more user scenarios. For example, a first partial sequence of the API calling sequence may correspond to a first user scenario, a second partial sequence of the API calling sequence may correspond to a second user scenario, and the first user scenario and the second user scenario are different user scenarios.

In a process in which the computing device identifies a user scenario based on the spatial-temporal graph, the computing device obtains a target API calling link through extraction based on the spatial-temporal graph, where the target API calling link includes a duplicate API calling link and an independent API calling link, the duplicate API calling link is a link whose link similarity is greater than or equal to a threshold in API calling links in the spatial-temporal graph, and the independent API calling link is a link whose link similarity is less than the threshold in the API calling links in the spatial-temporal graph; and the computing device determines a target user scenario based on the target API calling link, where the target user scenario is a user scenario obtained after a redundant user scenario is eliminated, and there is a correspondence between the target user scenario and a partial sequence in the API calling sequence.

In a possible implementation, the computing device performs similarity matching in the spatial-temporal graph based on a Euclidean distance between local API calling links, until all local API calling links in the spatial-temporal graph are traversed. If there is no local API calling link whose similarity is less than the threshold in the spatial-temporal graph, the computing device continues to perform continuous matching in a subsequently collected spatial-temporal graph.

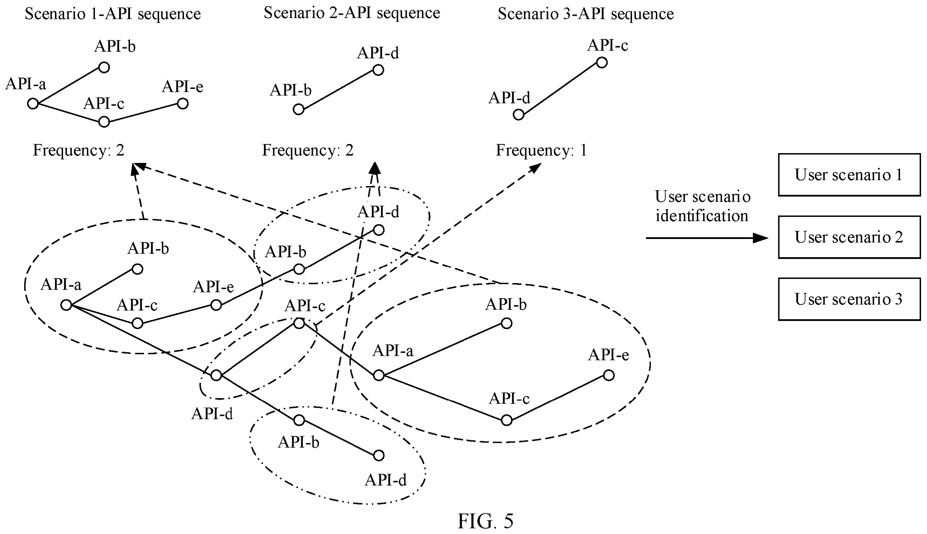

FIG. 5 is a schematic flowchart of performing user scenario identification based on a spatial-temporal graph according to an embodiment of this application. In the example shown in FIG. 5, a computing device performs similarity matching on API calling links in a spatial-temporal graph, and extracts a target API calling link. The target API calling link includes a duplicate API calling link and an independent API calling link. Specifically, the computing device performs similarity matching on local links of the API calling links in the spatial-temporal graph, determines a local API calling link whose link similarity is greater than or equal to a threshold as a duplicate API calling link, and determines a local API calling link whose link similarity is less than the threshold as an independent API calling link.

For example, in the example shown in FIG. 5, the computing device performs similarity matching based on the API calling links in the spatial-temporal graph, and finds that a similarity between local link 1 "API-a→API-b, API-a→API-c→API-e" and local link 2 is 100%, in other words, local link 1 appears twice. In this case, the computing device determines local link 1 as the target API calling link, and abstracts local link 1 as target user scenario 1.

For another example, in the example shown in FIG. 5, the computing device performs similarity matching based on the API calling links in the spatial-temporal graph, and finds that local link 3 "API-d→API-c" does not have another API calling link whose similarity is greater than the threshold, in other words, local link 3 does not have a duplicate API calling link. In this case, the computing device determines local link 3 as the target API calling link, and abstracts local link 3 as target user scenario 3.

In embodiments of this application, the computing device can extract the duplicate API calling link based on the spatial-temporal graph, to identify a duplicate user scenario, so that the computing device can reduce the duplicate user scenario. This improves test efficiency of performing scenario-based testing by the computing device.

In a possible implementation, the computing device parses the target API calling link based on an artificial intelligence model, to generate a test case text, where the test case text is used to describe test requirements in different user scenarios. The artificial intelligence model is, for example, a long short-term memory (long short-term memory, LSTM) model, a recurrent neural network (recurrent neural network, RNN) model, and a hash algorithm model.

Specifically, the computing device parses text information of the target API calling link based on an artificial intelligence algorithm. The text information includes an interface time sequence, an interface description, an interface parameter, and the like. The computing device reassembles parsed text information based on the target API calling link, to generate a test case text corresponding to a user scenario, where the test case text is used to describe a scenario-based testing requirement corresponding to the user scenario.

Still refer to FIG. 5. In the example shown in FIG. 5, text information of local link 1 corresponding to target user scenario 1 is, for example, "interface time sequence of API-a: t1, interface description: Name-a, interface parameter: parameter 1=value 1, parameter 2=value 2; interface time sequence of API-b: t2, interface description: Name-b, interface parameter: parameter 3=value 1; interface time sequence of API-c: t2, interface description: Name-c, interface parameter: parameter 4=value 1; and interface time sequence of API-e: t3, interface description: Name-e, interface parameter: parameter 5=value 1". The computing device parses the text information of local link 1 based on the artificial intelligence model, to generate the test case text.

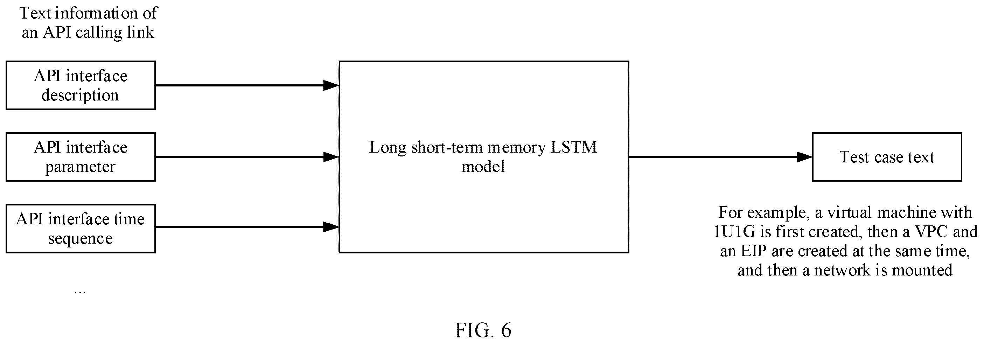

FIG. 6 is a schematic flowchart of generating a test case text according to an embodiment of this application. In the example shown in FIG. 6, a computing device parses text information of an API calling link to generate a scenario test case text. Specifically, the computing device inputs text information such as an interface description of an API, an interface parameter of the API, and an interface time sequence of the API into a long short-term memory LSTM model, and generates a test case text based on the LSTM model.

In the example shown in FIG. 6, the test case text generated by the computing device is, for example, a virtual machine with 1U1G is first created, then a private cloud VPC and an elastic IP are created at the same time, and then a network is mounted.

In embodiments of this application, the computing device can parse the API calling link based on an artificial intelligence model like the LSTM to obtain the test case text, so that a user can perform scenario-based testing based on the test case text. This improves test accuracy of performing scenario-based testing by the computing device.

In a possible implementation, the computing device converts the target API calling link based on a cloud platform test framework, to generate test scripts corresponding to different user scenarios. Specifically, the computing device adapts to a common library in the cloud platform test framework based on an interface description, an interface parameter, and an interface time sequence of the target API calling link, and generates, based on a function of the common library, the test scripts corresponding to different user scenarios. Calling relationships between different test scripts and the target API calling link are consistent.

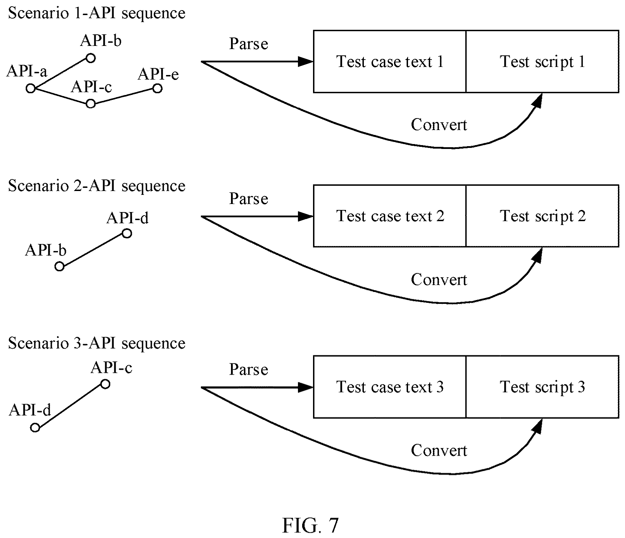

FIG. 7 is a diagram of generating a test case text and a test script according to an embodiment of this application. In the example shown in FIG. 7, a computing device parses API calls corresponding to different user scenarios to generate test case texts, where the test case texts are used to describe test requirements corresponding to the user scenarios. The computing device converts the API calls corresponding to different user scenarios to generate test scripts, where the test scripts are used by the computing device to perform scenario-based testing.

For example, in the example shown in FIG. 7, the computing device parses an API calling link corresponding to user scenario 1 to obtain test case text 1, and converts the API calling link corresponding to user scenario 1 to obtain test script 1.

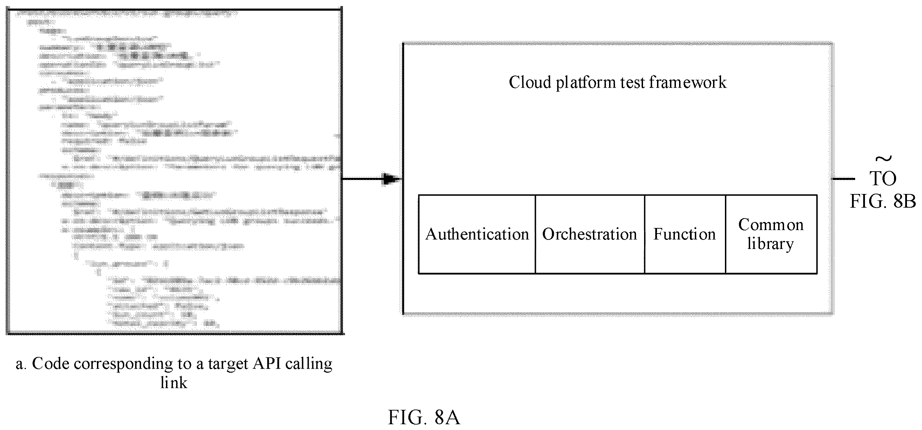

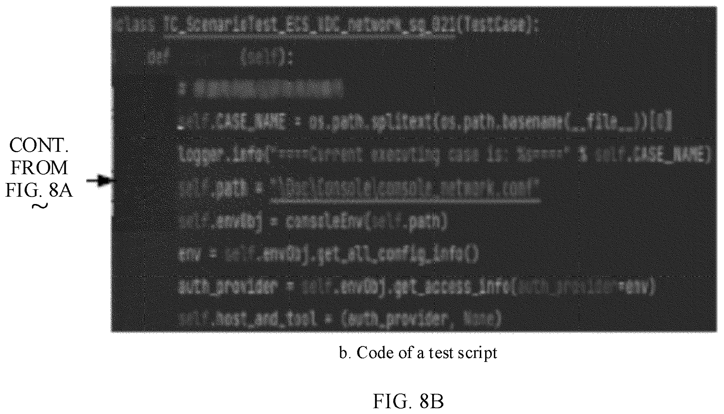

FIG. 8A and FIG. 8B are a diagram of a test script according to an embodiment of this application. In the example shown in FIG. 8A and FIG. 8B, a in the figure is a diagram of code corresponding to a target API calling link, and b in the figure is a diagram of code of a converted test script. A computing device processes, based on functions such as authentication, orchestration, and a function of a cloud platform test framework, code corresponding to the target API calling link, to convert the target API calling link into a test script.

204: Perform software testing based on the test case.

The computing device performs software testing based on the test case. Specifically, the computing device calls, based on the spatial-temporal graph on the cloud platform, the test scripts in different user scenarios to perform software testing, and generates test information, where the test information includes a test execution result and representation information, and the representation information is used to describe a user scenario feature corresponding to the test execution result.

In a possible implementation, in a process in which the computing device performs software testing based on the test case, the computing device may alternatively manually configure a test environment based on a test case text to perform software testing, or the computing device may modify a test case script based on a test case text, to obtain a test case script corresponding to a new user scenario. The computing device automatically performs software testing based on the modified test case script.

In a process in which the computing device calls the test scripts in different user scenarios on the cloud platform to perform software testing, the computing device sets an execution sequence, a quantity of execution times, and an execution parameter for the test scripts in different user scenarios based on the spatial-temporal graph. The execution sequence is, for example, serial or parallel. The computing device obtains an execution result of the test script by using a monitoring module, to generate the test information. The test information includes the test execution result and the representation information. The test execution result is, for example, success, failure, exception, and blocking. The representation information is, for example, abnormal data obtained when the test script is executed at a position.

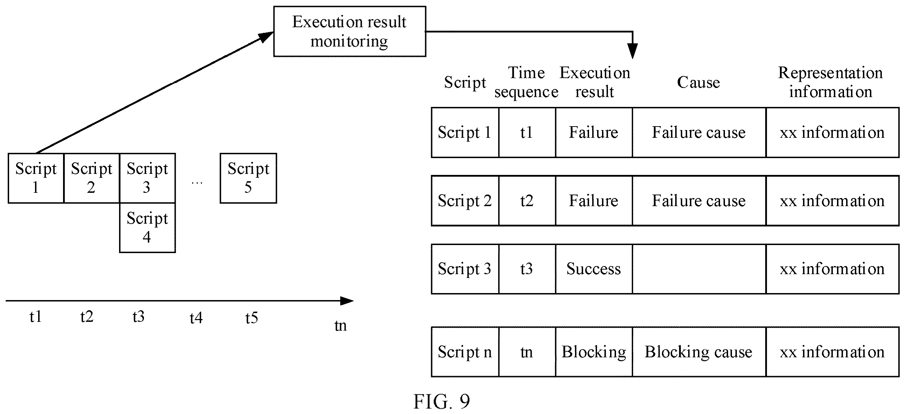

FIG. 9 is a diagram of performing software testing according to an embodiment of this application. In the embodiment shown in FIG. 9, a computing device sets an execution sequence, a quantity of execution times, and an execution parameter for test scripts in different user scenarios based on a spatial-temporal graph. For example, the computing device sets to execute test script 1 at moment t1, execute test script 2 at moment t2, and execute test script 4 and test script 5 in parallel at moment t3.

In the example shown in FIG. 9, the computing device obtains test information of the test script by using a monitoring module, where the test information includes a test execution result and representation information. For example, in the example shown in FIG. 9, an execution result of script 1 is failure, and representation information is xx information. An execution result of script 3 is success, and representation information is xx information.

In a possible implementation, the computing device can further perform analysis based on the test information, to obtain an association relationship between different user scenarios; and aggregate different user scenarios based on the association relationship, to generate a scenario aggregation result, where the scenario aggregation result is used to reduce redundant user scenario testing. For example, if the computing device finds, based on the test information, that a plurality of scenario test cases often fail at the same time, or a same type of problem is often found, the computing device can determine that there is an association relationship between a plurality of scenarios, and aggregate the plurality of user scenarios based on an association algorithm.

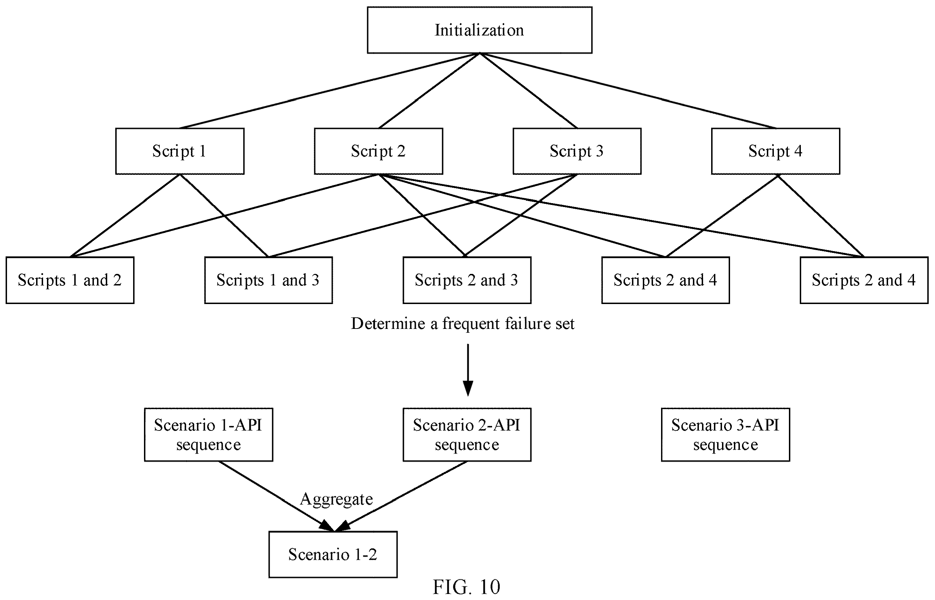

FIG. 10 is a diagram of performing user scenario aggregation according to an embodiment of this application. In the example shown in FIG. 10, a computing device performs data mining and analysis based on test execution results and representation information that correspond to different test scripts. For example, the computing device calculates a support level and a confidence level of test execution results obtained at a same moment, and determines a frequent failure set at the moment based on the support level and the confidence level. The support level indicates a ratio of a transaction set including both a condition and a result to a total transaction set, that is, a probability that two test execution results occur at the same time. The confidence level indicates a ratio of the transaction set including both the condition and the result to a transaction set including the condition, that is, a ratio of two test execution results occurring at the same time to one of the test execution results occurring. The computing device aggregates different user scenarios in the frequent failure set, to generate a scenario aggregation result.

In the example shown in FIG. 10, the computing device analyzes, based on test information, an association relationship between test scripts corresponding to different user scenarios, and determines that there is an association relationship between a script corresponding to scenario 1 and a script corresponding to scenario 2. The computing device aggregates scenario 1 and scenario 2 to obtain scenario 1-2.

In embodiments of this application, the computing device can analyze the association relationship between different user scenarios based on the test information, and aggregate the user scenarios based on the association relationship. This reduces redundant test scenarios, and improves test efficiency of performing scenario-based testing by user equipment.

It can be learned from the foregoing embodiment that, in embodiments of this application, the computing device can analyze a user scenario based on an application programming interface API calling sequence, eliminate a redundant user scenario, generate a corresponding test case based on a non-redundant user scenario, and call the test case to perform software testing. This avoids redundant user scenario testing, and improves test efficiency of performing scenario-based testing on the cloud platform.

In addition, in embodiments of this application, the computing device may intelligently generate a scenario test case based on feature information of an actual use scenario of the user, does not need to manually sort out scenarios and compile test cases, and may perform adaptive update iteration based on a change of the use scenario of the user. In addition, the computing device monitors the test information during scheduling and execution, performs mining and association analysis on the test information, and continuously aggregates associated user scenarios. This improves adaptability, accuracy, and execution efficiency of overall scenario-based testing.

The foregoing describes the software test method provided in embodiments of this application. The following describes a test apparatus provided in embodiments of this application.

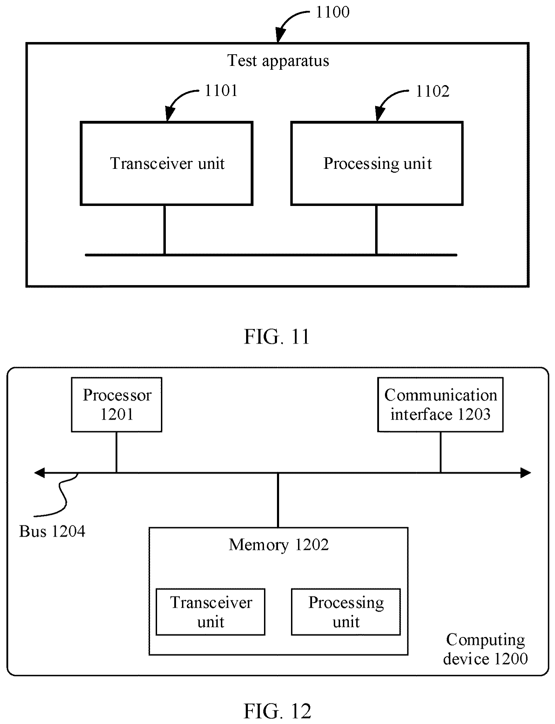

FIG. 11 is a diagram of a structure of a test apparatus according to an embodiment of this application. In the example shown in FIG. 11, the test apparatus is configured to implement the steps performed by the computing device in the foregoing embodiments. The test apparatus 1100 includes a transceiver unit 1101 and a processing unit 1102.

The transceiver unit 1101 is configured to obtain an application programming interface API calling sequence on a cloud platform, where the API calling sequence includes API calling records sorted by time on the cloud platform, and the API calling records include names of APIs called by a computing device at different times. The processing unit 1102 is configured to generate a spatial-temporal graph based on the API calling sequence, where the spatial-temporal graph includes calling links of different APIs at different moments. The processing unit 1102 is further configured to identify, based on the spatial-temporal graph, a user scenario corresponding to a calling relationship between a plurality of APIs and calling times, and generate a test case corresponding to at least one user scenario. The processing unit 1102 is further configured to perform software testing based on the test case.

In a possible implementation, the processing unit 1102 is specifically configured to obtain a target API calling link through extraction based on the spatial-temporal graph, where the target API calling link includes a duplicate API calling link and an independent API calling link, the duplicate API calling link is a link whose link similarity is greater than or equal to a threshold in API calling links in the spatial-temporal graph, and the independent API calling link is a link whose link similarity is less than the threshold in the API calling links in the spatial-temporal graph. The processing unit 1102 is specifically configured to determine a target user scenario based on the target API calling link, where the target user scenario is a user scenario obtained after a redundant user scenario is eliminated.

In a possible implementation, the processing unit 1102 is specifically configured to convert the target API calling link based on a cloud platform test framework, to generate test scripts corresponding to different user scenarios.

In a possible implementation, the processing unit 1102 is specifically configured to parse the target API calling link based on an artificial intelligence model, to generate a test case text, where the test case text is used to describe test requirements in different user scenarios.

In a possible implementation, the processing unit 1102 is specifically configured to: call the test scripts in different user scenarios to perform software testing, and generate test information, where the test information includes a test execution result and representation information, and the representation information is used to describe a user scenario feature corresponding to the test execution result.

In a possible implementation, the processing unit 1102 is further configured to perform analysis based on the test information, to obtain an association relationship between different user scenarios. The processing unit 1102 is further configured to aggregate different user scenarios based on the association relationship, to generate a scenario aggregation result, where the scenario aggregation result is used to reduce redundant user scenario testing.

It should be understood that division of the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or a part of units may be implemented in a form of software invoked by a processing element, and a part of units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or a part of the units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in the processing unit, or may be implemented in the form of software invoked by the processing element.

It should be noted that, for ease of description, the foregoing method embodiments are described as a series of action combinations. However, a person skilled in the art should learn that the present invention or this application is not limited by the described action sequence. In addition, a person skilled in the art should also learn that embodiments described in this specification are all examples, and actions involved are not necessarily required in the present invention or this application.

Another appropriate step combination that can be figured out by a person skilled in the art based on the foregoing described content also falls within the protection scope of the present invention or this application. In addition, a person skilled in the art should also learn that embodiments described in this specification are all preferred embodiments, and actions involved are not necessarily required in the present invention or this application.

FIG. 12 is a diagram of a structure of a computing device according to an embodiment of this application. As shown in FIG. 12, the computing device 1200 includes a processor 1201, a memory 1202, a communication interface 1203, and a bus 1204. The processor 1201, the memory 1202, and the communication interface 1203 are coupled through the bus (not marked in the figure). The memory 1202 stores instructions. When the execution instructions in the memory 1202 are executed, the computing device 1200 performs the method performed by the computing device in the foregoing method embodiment.

The computing device 1200 may be one or more integrated circuits configured to implement the foregoing method, for example, one or more application-specific integrated circuits (application-specific integrated circuits, ASICs), one or more microprocessors (digital signal processor, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

The processor 1201 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory 1202 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1202 stores executable program code, and the processor 1201 executes the executable program code to separately implement functions of the foregoing transceiver unit and processing unit, to implement the foregoing software test method. In other words, the memory 1202 stores instructions for performing the foregoing software test method.

The communication interface 1203 uses a transceiver module, for example, but not limited to, a network interface card or a transceiver, to implement communication between the computing device 1200 and another device or a communication network.

The bus 1204 may further include a power bus, a control bus, a status signal bus, and the like, in addition to a data bus. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. The bus may be classified into an address bus, a data bus, a control bus, and the like.

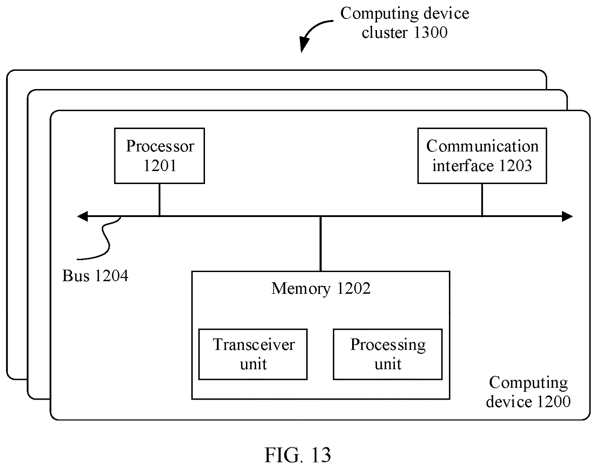

FIG. 13 is a diagram of a computing device cluster according to an embodiment of this application. As shown in FIG. 13, the computing device cluster 1300 includes at least one computing device 1200.

As shown in FIG. 13, the computing device cluster 1300 includes the at least one computing device 1200. A memory 1202 in one or more computing devices 1200 in the computing device cluster 1300 may store same instructions for performing the foregoing software test method.

In some possible implementations, the memory 1202 in the one or more computing devices 1200 in the computing device cluster 1300 may alternatively separately store a part of instructions for performing the foregoing software test method. In other words, a combination of the one or more computing devices 1200 may jointly execute the instructions for performing the foregoing software test method.

It should be noted that memories 1202 in different computing devices 1200 in the computing device cluster 1300 may store different instructions that are respectively used for performing a part of functions of the foregoing test apparatus. In other words, the instructions stored in the memories 1202 in the different computing devices 1200 may be used to implement functions of one or more modules in a transceiver unit and a processing unit.

In some possible implementations, the one or more computing devices 1200 in the computing device cluster 1300 may be connected through a network. The network may be a wide area network, a local area network, or the like.

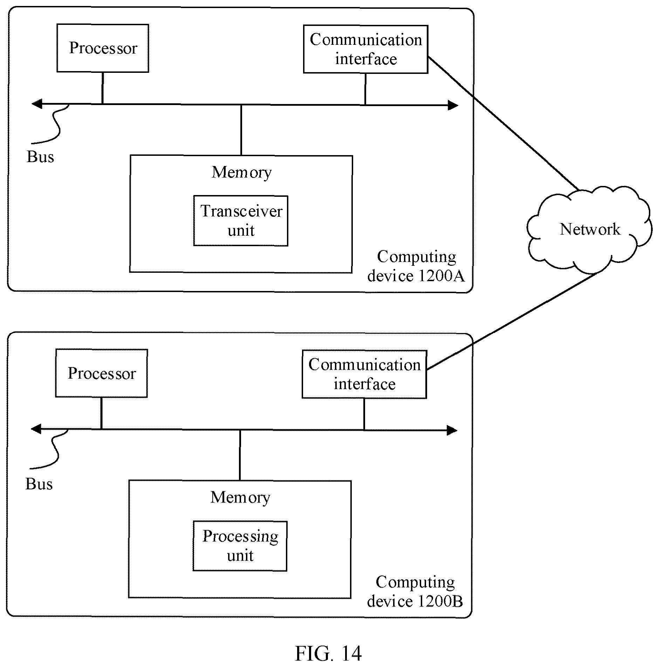

FIG. 14 is a diagram in which computer devices in a computer cluster are connected through a network according to an embodiment of this application. As shown in FIG. 14, two computing devices 1200A and 1200B are connected through a network. Specifically, the computing devices are connected to the network through communication interfaces in the computing devices.

In a possible implementation, a memory in the computing device 1200A stores instructions for performing a function of a transceiver module. In addition, a memory in the computing device 1200B stores instructions for performing a function of a processing module.

It should be understood that functions of the computing device 1200A shown in FIG. 14 may alternatively be completed by a plurality of computing devices. Similarly, functions of the computing device 1200B may alternatively be completed by a plurality of computing devices.

In another embodiment of this application, a computer-readable storage medium is further provided. The computer-readable storage medium stores computer-executable instructions. When a processor of a device executes the computer-executable instructions, the device performs the method performed by the computing device in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the computing device in the foregoing method embodiment.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented via some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (ROM, read-only memory), a random access memory (RAM, random access memory), a magnetic disk, or an optical disc.

**Claims**

1.  A software test method, comprising:

    obtaining an application programming interface API calling sequence on a cloud platform, wherein the API calling sequence comprises API calling records sorted by time on the cloud platform, and the API calling records comprise names of APIs called by a computing device at different times;
    generating a spatial-temporal graph based on the API calling sequence, wherein the spatial-temporal graph comprises a calling relationship between a plurality of APIs and calling times;
    identifying, based on the spatial-temporal graph, at least one user scenario corresponding to the API calling sequence, and generating a test case corresponding to the at least one user scenario; and

    performing software testing based on the test case.

2.  The method according to claim 1, wherein identifying, based on the spatial-temporal graph, the at least one user scenario corresponding to the API calling sequence comprises:

    obtaining a target API calling link through extraction based on the spatial-temporal graph, wherein the target API calling link comprises a duplicate API calling link and an independent API calling link, the duplicate API calling link is a link whose link similarity is greater than or equal to a threshold in API calling links in the spatial-temporal graph, and the independent API calling link is a link whose link similarity is less than the threshold in the API calling links in the spatial-temporal graph; and
    determining a target user scenario based on the target API calling link, wherein the target user scenario is a user scenario obtained after a redundant user scenario is eliminated.

3.  The method according to claim 2, wherein generating the test case corresponding to the at least one user scenario comprises:
    converting the target API calling link based on a cloud platform test framework, to generate test scripts corresponding to different user scenarios.

4.  The method according to claim 2 or 3, wherein generating the test case corresponding to the at least one user scenario comprises:
    parsing the target API calling link based on an artificial intelligence model, to generate a test case text, wherein the test case text is used to describe test requirements in different user scenarios.

5.  The method according to any one of claims 1 to 4, wherein performing software testing based on the test scripts comprises:
    calling the test scripts in different user scenarios to perform software testing, and generating test information, wherein the test information comprises a test execution result and representation information, and the representation information is used to describe a user scenario feature corresponding to the test execution result.

6.  The method according to claim 5, wherein the method further comprises:

    performing analysis based on the test information, to obtain an association relationship between different user scenarios; and
    aggregating different user scenarios based on the association relationship, to generate a scenario aggregation result, wherein the scenario aggregation result is used to reduce redundant user scenario testing.

7. A test apparatus, comprising:

a transceiver unit, configured to obtain an application programming interface API calling sequence on a cloud platform, wherein the API calling sequence comprises API calling records sorted by time on the cloud platform, and the API calling records comprise names of APIs called by a computing device at different times; and a processing unit, configured to generate a spatial-temporal graph based on the API calling sequence, wherein the spatial-temporal graph comprises a calling relationship between a plurality of APIs and calling times, wherein the processing unit is further configured to: identify, based on the spatial-temporal graph, at least one user scenario corresponding to the API calling sequence, and generate a test case corresponding to the at least one user scenario; and the processing unit is further configured to perform software testing based on the test case.

8. The apparatus according to claim 7, wherein the processing unit is specifically configured to:

obtain a target API calling link through extraction based on the spatial-temporal graph, wherein the target API calling link comprises a duplicate API calling link and an independent API calling link, the duplicate API calling link is a link whose link similarity is greater than or equal to a threshold in API calling links in the spatial-temporal graph, and the independent API calling link is a link whose link similarity is less than the threshold in the API calling links in the spatial-temporal graph; and determine a target user scenario based on the target API calling link, wherein the target user scenario is a user scenario obtained after a redundant user scenario is eliminated.

9. The apparatus according to claim 8, wherein the processing unit is specifically configured to: convert the target API calling link based on a cloud platform test framework, to generate test scripts corresponding to different user scenarios.

10. The apparatus according to claim 8 or 9, wherein the processing unit is specifically configured to: parse the target API calling link based on an artificial intelligence model, to generate a test case text, wherein the test case text is used to describe test requirements in different user scenarios.

11. The apparatus according to any one of claims 7 to 10, wherein the processing unit is specifically configured to:
call the test scripts in different user scenarios to perform software testing, and generate test information, wherein the test information comprises a test execution result and representation information, and the representation information is used to describe a user scenario feature corresponding to the test execution result.

12. The apparatus according to claim 11, wherein the processing unit is further configured to:

perform analysis based on the test information, to obtain an association relationship between different user scenarios; and aggregate different user scenarios based on the association relationship, to generate a scenario aggregation result, wherein the scenario aggregation result is used to reduce redundant user scenario testing.

13. A computing device cluster, comprising a processor, wherein the processor is coupled to a memory, the memory is configured to store instructions, and when the instructions are executed by the processor, the computing device cluster is enabled to perform the method according to any one of claims 1 to 6.

14. A computer-readable storage medium, wherein the computer-readable storage medium stores instructions, and when the instructions are executed, a computer is enabled to perform the method according to any one of claims 1 to 6.

15. A computer program product, wherein the computer program product comprises instructions, and when the instructions are executed, a computer is enabled to implement the method according to any one of claims 1 to 6.

FIG. 1

201: Obtain an application programming interface API calling sequence on a cloud platform, where the API calling sequence includes API calling records sorted by time on the cloud platform

202: Generate a spatial-temporal graph based on the API calling sequence, where the spatial-temporal graph includes a calling relationship between a plurality of APIs and calling times

203: Identify, based on the spatial-temporal graph, at least one user scenario corresponding to the API calling sequence, and generate a test case corresponding to the at least one user scenario

204: Perform software testing based on the test case

FIG. 2

Category

Cloud platform

Gateway

Shadow client

Monitor application interface calling records

User 1

User 2

User 3

Sort by API calling timestamp

FIG. 3

FIG. 4

FIG. 5

EP 4 660 814 A1

Text information of
an API calling link

```
┌─────────────────┐
│  API interface  │ ─────────────┐
│   description   │              │
└─────────────────┘              ▼
                          ┌──────────────────────────┐              ┌─────────────────┐
┌─────────────────┐       │                          │              │                 │
│  API interface  │ ────▶ │ Long short-term memory LSTM│ ──────────▶ │  Test case text │
│    parameter    │       │          model           │              │                 │
└─────────────────┘       │                          │              └─────────────────┘
                          └──────────────────────────┘
┌─────────────────┐              ▲
│API interface time│ ────────────┘
│    sequence     │
└─────────────────┘
```

...

For example, a virtual machine with
1U1G is first created, then a VPC and
an EIP are created at the same time,
and then a network is mounted

FIG. 6

Scenario 1-API sequence

API-b

API-a  API-c  API-e

Parse →

| Test case text 1 | Test script 1 |
|---|---|

Convert

Scenario 2-API sequence

API-d

API-b

Parse →

| Test case text 2 | Test script 2 |
|---|---|

Convert

Scenario 3-API sequence

API-c

API-d

Parse →

| Test case text 3 | Test script 3 |
|---|---|

Convert

FIG. 7

a. Code corresponding to a target API calling link

| | | | |
|---|---|---|---|
| Authentication | Orchestration | Function | Common library |

Cloud platform test framework

~
TO
FIG. 8B

FIG. 8A

b. Code of a test script

FIG. 8B

CONT.
FROM
FIG. 8A

Execution result monitoring

| Script | Script | Script | ... | Script |
|--------|--------|--------|-----|--------|
| 1 | 2 | 3 | | 5 |

Script 4

t1   t2   t3   t4   t5        tn

| Script | Time sequence | Execution result | Cause | Representation information |
|--------|---------------|------------------|-------|----------------------------|
| Script 1 | t1 | Failure | Failure cause | xx information |
| Script 2 | t2 | Failure | Failure cause | xx information |
| Script 3 | t3 | Success | | xx information |
| Script n | tn | Blocking | Blocking cause | xx information |

FIG. 9

FIG. 10

1100

Test apparatus

1101

Transceiver unit

1102

Processing unit

FIG. 11

Processor 1201

Communication interface 1203

Bus 1204

Memory 1202

Transceiver unit

Processing unit

Computing device 1200

FIG. 12

Computing device
cluster 1300

Processor
1201

Communication
interface 1203

Bus 1204

Memory 1202

Transceiver
unit

Processing
unit

Computing
device 1200

FIG. 13

FIG. 14

## INTERNATIONAL SEARCH REPORT

| International application No. |
|---|
| **PCT/CN2023/124446** |

**A. CLASSIFICATION OF SUBJECT MATTER**

G06F11/36(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 测试, 用例, 场景, 调用, 顺序, 次序, 依赖, 时序, 时间, API, test, condition, order, transfer, scene

**C. DOCUMENTS CONSIDERED TO BE RELEVANT**

| Category* | Citation of document, with indication, where appropriate, of the relevant passages | Relevant to claim No. |
|---|---|---|
| X | WO 2022179363 A1 (HUAWEI CLOUD COMPUTING TECHNOLOGY CO., LTD.) 01 September 2022 (2022-09-01) description, page 13, 7th-to-last line-page 16, line 11 | 1-15 |
| X | US 11429513 B1 (AMAZON TECHNOLOGIES, INC.) 30 August 2022 (2022-08-30) description, paragraphs [0044]-[0053] | 1-15 |
| A | US 7908590 B1 (PARASOFT CORP.) 15 March 2011 (2011-03-15) entire document | 1-15 |
| A | CN 115018473 A (PING AN BANK CO., LTD.) 06 September 2022 (2022-09-06) entire document | 1-15 |
| A | CN 115391188 A (NSFOCUS TECHNOLOGIES GROUP CO., LTD. et al.) 25 November 2022 (2022-11-25) entire document | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 November 2023** | **25 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/124446**

| Patent document cited in search report | | | Publication date (day/month/year) | Patent family member(s) | | | Publication date (day/month/year) |
|---|---|---|---|---|---|---|---|
| WO | 2022179363 | A1 | 01 September 2022 | EP | 4270199 | A1 | 01 November 2023 |
| | | | | CN | 114968754 | A | 30 August 2022 |
| US | 11429513 | B1 | 30 August 2022 | None | | | |
| US | 7908590 | B1 | 15 March 2011 | None | | | |
| CN | 115018473 | A | 06 September 2022 | None | | | |
| CN | 115391188 | A | 25 November 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310179118